# EUROPÄISCHE PATENTSCHRIFT

(11) **EP 1 060 917 B1**
(45) Veröffentlichungstag und Bekanntmachung des Hinweises auf die Patenterteilung: **27.07.2005**
(21) Anmeldenummer: 00112539.2
(22) Anmeldetag: 14.06.2000
(51) Int. Cl.: B60H 1/00

(54) **Luftzuführungssystem für den Besatzungsraum eines Kampfpanzers oder Kampfpanzerturms**
Air delivery system for the crew space of a tank or a tank turret
Système d'alimentation en air pour un espace d'équipage d'un véhicule de combat ou pour la tourelle d'un véhicule militaire

(30) Priorität: 19.06.1999 DE 19928109
(43) Veröffentlichungstag der Anmeldung: 20.12.2000
(73) Patentinhaber: Krauss-Maffei Wegmann GmbH & Co. KG, 34127 Kassel (DE)
(72) Erfinder: Sprafke, Uwe, Dipl.-Ing., 34270 Schauenburg (DE); Pietrzok, Klaus-Peter, 34260 Kaufungen (DE)
(74) Vertreter: Feder, Wolf-Dietrich, Dr. Dipl.-Phys.

(56) Entgegenhaltungen:
- EP-A- 0 628 451
- DE-A- 3 817 365
- DE-U- 6 752 410
- US-A- 2 931 286

## Beschreibung

Die Erfindung betrifft einen Besatzungsraum eines Kampfpanzers oder Kampfpanzerturms, mit einem Luftzuführungssystem wobei in den Besatzungsraum von vorne die Hauptwaffe derart hineingeführt ist, dass sich der Waffenverschluss im Besatzungsraum befindet und hinter dem Besatzungsraum ein von diesem abgetrennter Elektronikraum angeordnet ist mit einem im Elektronikraum angeordneten Gebläse, von dem aus über mindestens eine Luftzuführungsleitung Luft diesem Besatzungsraum zugeführt wird.

Luftzuführungssysteme sind sowohl bei Kraftfahrzeugen als auch bei Luftfahrzeugen und insbesondere bei Kampffahrzeugen bekannt.

So ist beispielsweise in DE 197 20 815 A1 ein Luftzuführungssystem für einen Kampfpanzerturm beschrieben, bei dem im Kampfpanzerturm außerhalb des Besatzungsraums ein Gebläse angeordnet ist, von dem aus gegebenenfalls über ein Kühlaggregat gekühlte Luft über Luftleitungen in den Besatzungsraum geführt wird, wobei am Ende jeder Luftzuführungsleitung Ausblasdüsen angeordnet sind.

In ähnlicher Weise gibt es in Kraftfahrzeugen, Autobussen und Luftfahrzeugen festverlegte Luftzuführungssysteme mit Ausblasdüsen an verschiedenen Stellen des mit Personen zu besetzenden Innenraums.

In DE 38 17 365 A1 ist ein Lastkraftwagen oder Anhänger mit einem durch ein Kühlaggregat am Vorderende durch Luftumwälzung gekühlten Lade- oder Kühlraum beschrieben mit an der Decke des Kühlraums mittels Klettverschlüssen befestigten Leitungen, die eine ebene Oberwandung und eine halbkreis- oder halbellipsenförmige Unterwandung aufweisen, wobei die Oberwandung luftundurchlässig ausgebildet ist und die Unterwandung durch ein luftdurchlässiges Gewebe gebildet ist. Die Leitungen sind durch einen Adapter an das Kühlaggregat angeschlossen.

In dem Dokument DE-672 410 U ist eine Sicherheitsscheibenheizung für Kraftfahrzeuge beschrieben, bei welcher Warmluft über einen flexiblen Warmluftschlauch den Fenstern zugeführt wird. Der Warmluftschlauch ist mit regulier- und verschließbaren Austritts-Öffnungen versehen.

Weiterhin ist es aus EP-A-0 628 451 bekannt, an einer Sonnenblende eines Kraftfahrzeugs textile, beispielsweise Taschen tragende Teile mittels Klettverschlüssen zu befestigen.

Diese bekannten Luftzuführungssysteme haben den Nachteil, daß einerseits die im Innenraum über Luftzuführungsdüsen ausgeblasene Luft schlecht verteilt wird und die Luftzuführungssysteme andererseits relativ fest installiert werden müssen und keine flexible Handhabung in der Luftzuführung gestatten, was insbesondere in Kampfpanzern, wo nur sehr wenig Raum zur Verfügung steht, von Nachteil ist.

Der Erfindung liegt die Aufgabe zugrunde, ein Luftzuführungssystem mit den eingangs angegebenen Merkmalen so auszubilden, daß bei geringem Installationsaufwand ein in seiner Anordnung und Handhabung außerordentlich flexibles Luftzuführungssystem entsteht, bei dem eine sehr gute Luftverteilung erreicht wird, die an die speziellen Raumverhältnisse gezielt angepaßt werden kann, wobei unangenehme Zugerscheinungen minimalisiert sind, und das die in den Besatzungsraum hineingeführte Hauptwaffe sowie den Waffenbediener nicht stört und durch den beim Abschuss in den Besatzungsraum zurücklaufenden Waffenverschluss nicht zerstört wird.

Die Lösung dieser Aufgabe erfolgt erfindungsgemäß mit den Merkmalen aus dem Patentanspruch 1. Vorteilhafte Weiterbildungen der Erfindung sind in den abhängigen Ansprüchen beschrieben.

Der Grundgedanke der Erfindung besteht darin, die dem Besatzungsraum des Kampfpanzers zugeführte Luft im Innenraum über einen Luftverteilungsbehälter zu verteilen, der als aufblasbarer Schlauch oder aufblasbares Kissen ausgebildet ist, aus einem flexiblen, schwer entflammbaren Material besteht und eine Vielzahl von in den Besatzungsraum gerichteten, als Schlitze ausgebildeten Luftaustrittsöffnungen besitzt, die an vorgegebenen Stellen des Luftverteilungsbehälters in vorgegebener und gegebenenfalls entsprechend den speziellen Verhältnissen unterschiedlicher Dichte und Größe in den Behälterwänden angeordnet sind. Der Luftverteilungsbehälter ist mindestens teilweise oberhalb des Verschlusses der Hauptwaffe angeordnet und mindestens dort sowie im Rücklaufbereich des Waffenverschlusses flach als Kissen, Schlauch oder Bündel von Schläuchen ausgebildet. Ein besonderer Vorteil dieses Luftverteilungsbehälters besteht darin, daß er nicht fest im oder am Innenraum installiert zu werden braucht, sondern er kann in irgendeiner Weise im Innenraum angeordnet sein und über lösbare Befestigungseinrichtungen, beispielsweise Druckknöpfe oder Klettbandbefestigungen, am Dach oder den Wänden des Innenraums befestigbar sein, so daß er leicht und rasch auch in eine andere Lage gebracht werden kann, wenn dies die augenblicklichen Einsatzverhältnisse erfordern. In dieser Ausführungsform ist das erfindungsgemäße Luftzuführungssystem besonders gut zur Anwendung in Kampfpanzern geeignet, in denen einerseits wenig Raum für die Luftzuführung zur Verfügung steht und andererseits wechselnde Einsatzverhältnisse und auch Anordnungsverhältnisse im Innenraum berücksichtigt werden müssen.

Im folgenden werden anhand der beigefügten Zeichnungen das Prinzip des erfindungsgemäßen Luftzuführungssystems sowie Ausführungsbeispiele näher erläutert.

In den Zeichnungen zeigen:
Fig. 1 in einer stark schematisierten, perspektivischen Darstellung einen Teil eines Kampfpanzerturms mit abgenommener Dachplatte, der mit einem Luftzuführungssystem versehen ist;
Fig. 2 in einer Seitenansicht einen als aufblasbarer Schlauch ausgebildeten Luftverteilungsbehälter, insbesondere für den Kampfpanzerturm nach Fig. 1;
Fig. 3 in vergrößerter Darstellung einen Schnitt durch den Luftverteilungsbehälter gemäß Fig. 2 nach der Linie A-A in Fig. 2;
Fig. 4 einen Vertikalschnitt durch einen Teil eines Kampfpanzerturms mit einem Luftzuführungssystem, das einen Luftverteilungsbehälter nach Fig. 1 und 2 verwendet;
Fig. 5 in einer Darstellung analog Fig. 4 eine Variante dieses Luftzuführungssystems an einem Kampfpanzerturm.

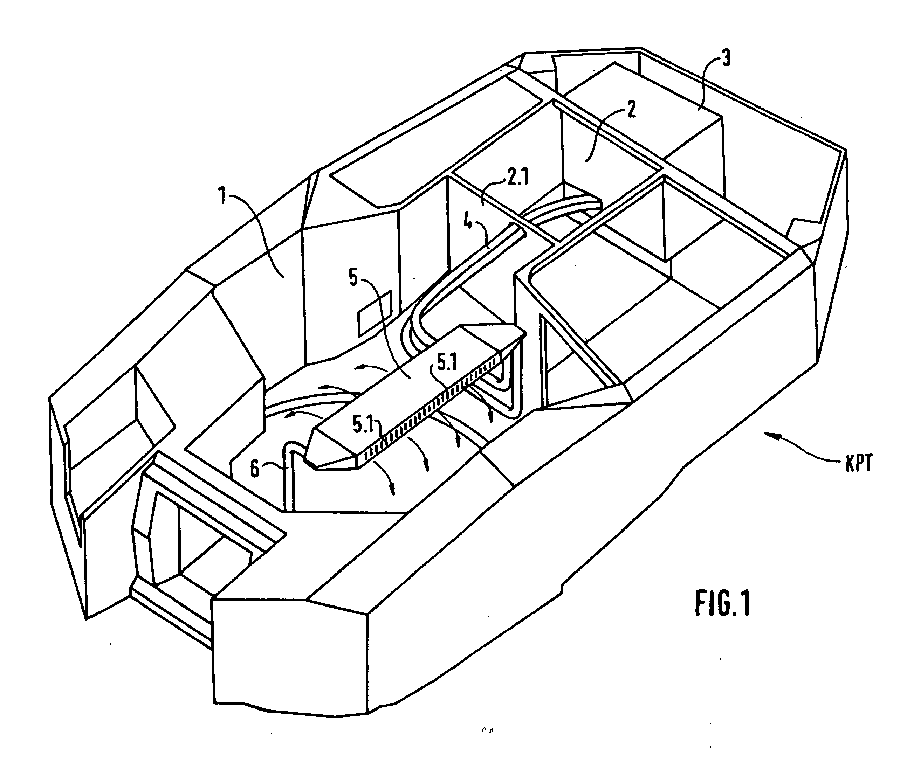

Es wird zunächst anhand von Fig. 1 das Grundprinzip des darzustellenden Luftzuführungssystems erläutert.

Der in Fig. 1 dargestellte Kampfpanzerturm KPT besitzt in seinem Innenraum einen Besatzungsraum 1, der in nicht dargestellter Weise alle Bedienungs- und Betätigungseinrichtungen für die Waffen, die Beobachtungsgeräte und sonstige Instrumente enthält. Vom vorderen Ende des Kampfpanzerturms KPT her ist in nicht dargestellter Weise die Hauptwaffe in den Turm hineingeführt. Hinter dem Besatzungsraum 1 ist durch eine Trennwand abgetrennt ein Elektronikraum 2 angeordnet, in dem in nicht dargestellter Weise elektronische Geräte untergebracht sind.

Weiterhin ist im Elektronikraum 2 ein Gebläse 3 angeordnet, dem ein Kühlaggregat vorgeschaltet sein kann und dessen Ausblasende in eine Luftzuführungsleitung 4 mündet, welche durch eine entsprechende Öffnung der Trennwand 2.1 in den Besatzungsraum hineingeführt ist und dort an einen Luftverteilungsbehälter 5 angeschlossen ist, der in weiter unten näher erläuterter Weise mit zahlreichen Luftaustrittsöffnungen 5.1 versehen ist. Dieser Luftverteilungsbehälter kann, wie ebenfalls weiter unten näher erläutert, fest oder lösbar an der Decke des Besatzungsraums angeordnet sein. Weiterhin kann an seinem vorderen Ende eine Luftabführungsleitung 6 angeschlossen sein, die beispielsweise zu einem weiteren Luftverteilungsbehälter führen kann, der an einer anderen Stelle im Turm oder in der Wanne des Kampfpanzers angeordnet ist.

Die vom Gebläse 3 angesaugte und über die Luftzuführungsleitung 4 dem Luftverteilungsbehälter 5 zugeführte Luft verteilt sich über die zahlreichen Luftaustrittsöffnungen 5.1 weitgehend gleichmäßig im Besatzungsraum 1 des Kampfpanzerturms KPT.

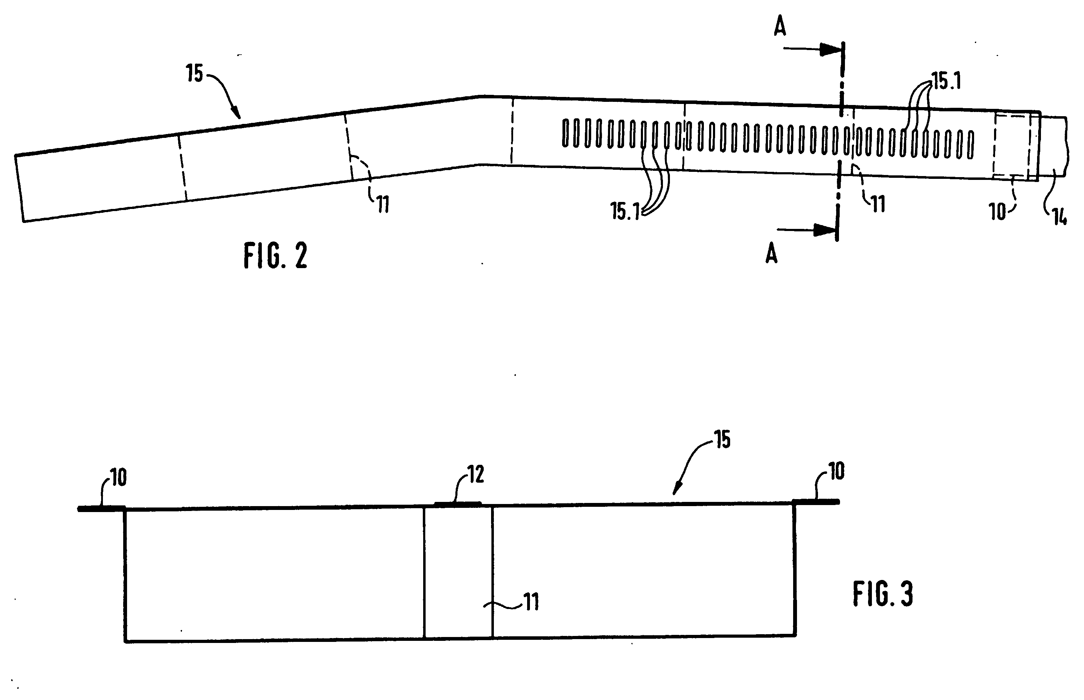

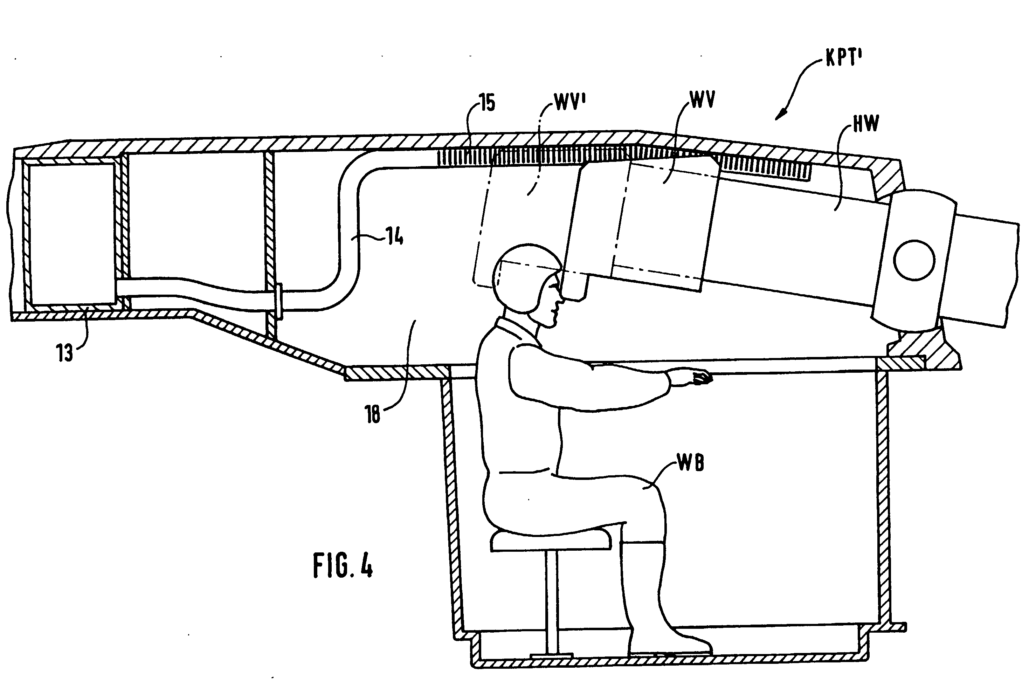

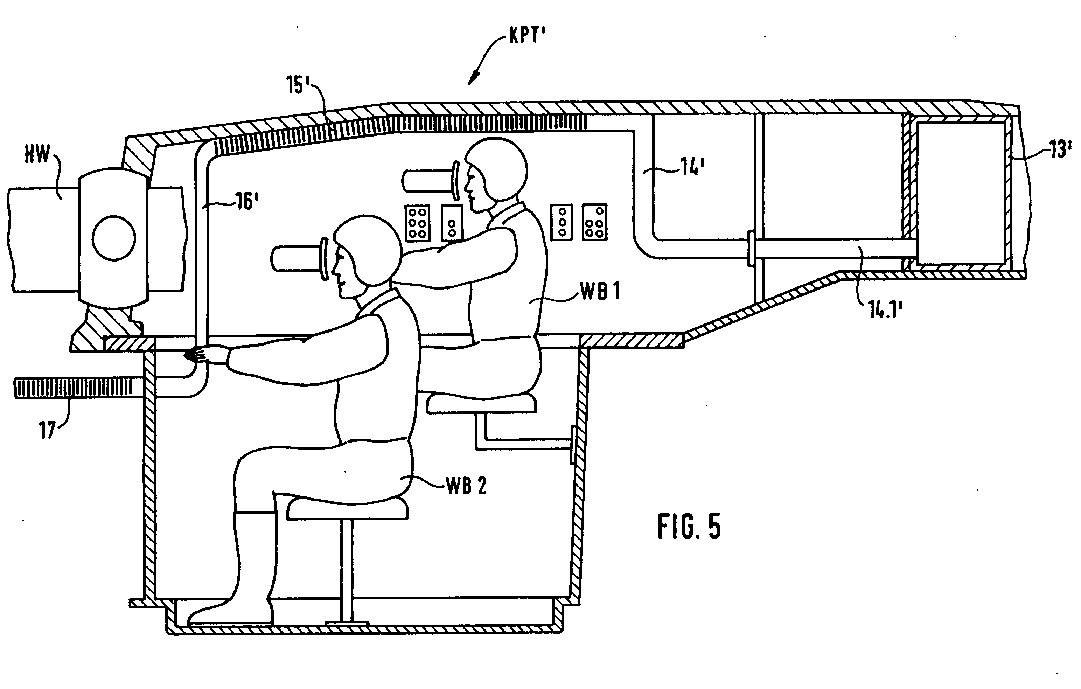

Die Fig. 2 und 3 zeigen eine Ausführungsform eines Luftverteilungsbehälters, wie er beispielsweise in einem Kampfpanzerturm nach Fig. 1 und, wie weiter unten beschrieben, nach den Fig. 4 und 5, verwendet werden kann. Dieser Luftverteilungsbehälter ist als flacher Schlauch 15 ausgebildet, der sich in Längsrichtung mindestens über einen Teil der Länge des Besatzungsraums erstrecken kann. Er besitzt an seinem Eintrittsende einen Anschluß für eine Luftzuführungsleitung 14 und wird durch die unter Druck einströmende Luft aufgeblasen, wobei im Inneren des Schlauches 15 angeordnete Halterungslaschen 11 die Formstabilität gewährleisten. An der Oberseite des Schlauches 15 sind in Längsrichtung verlaufende Klettverschlußbänder 10 und 12 angeordnet, mit denen der Schlauch 15 an der Decke des Innenraums festgelegt werden kann.

Die Wände des Schlauches bestehen aus einem schwer entflammbaren Material, beispielsweise einem Gewebematerial, das gegebenenfalls kunststoffbeschichtet sein kann. In den Seitenwänden und gegebenenfalls an der Unterseite des Schlauches 15 sind Luftaustrittsschlitze 15.1 angeordnet.

Selbstverständlich sind auch andere Ausbildungen des Luftverteilungsbehälters möglich. So kann er beispielsweise auch insgesamt aus Kunststoffmaterial bestehen.

Weiterhin kann es zweckmäßig sein, wenn der Luftverteilungsbehälter einen sich mindestens über einen Teil seiner Gesamtlänge erstreckenden Schlitz in der Behälterwand aufweist, der luftdicht verschließbar ist, beispielsweise mittels eines Klettverschlusses oder eines Reißverschlusses. Dabei ist es besonders vorteilhaft, wenn mindestens die Innenseiten der Wände des Luftverteilungsbehälters aus einem waschbaren Material bestehen. Es ist dann möglich, den Luftverteilungsbehälter nach Abnahme zu öffnen und durch Waschen auch in seinem Innenraum zu reinigen.

An der Decke oder den Wänden des Innenraums kann der Luftverteilungsbehälter über Druckknöpfe oder Klettbandbefestigungen lösbar befestigt sein. Es kann sich auch als vorteilhaft erweisen, wenn mindestens ein Teil der Luftaustrittsöffnungen mittels abnehmbarer Verschlußvorrichtungen verschließbar ist. Auf diese Weise kann die Luftverteilung variiert werden.

Selbstverständlich kann der Luftverteilungsbehälter außer der Ausführungsform nach Fig. 2 und 3 als langgestreckter Schlauch auch andere Formen besitzen wie beispielsweise die eines aufblasbaren Kissens.

In der Ausführungsform als flacher, lösbar befestigter Schlauch oder als flaches Kissen ist der in den Fig. 2 und 3 dargestellte Luftverteilungsbehälter mit besonderem Vorteil im Besatzungsraum eines Kampfpanzers, insbesondere eines Kampfpanzerturms, einsetzbar. Dies wird anhand der Fig. 4 und 5 näher erläutert.

Fig. 4 zeigt einen Kampfpanzerturm KPT' im Vertikalschnitt, wobei zahlreiche, den Besatzungsraum erfüllende Geräte und Handhabungen nicht dargestellt sind, die bekannt sind und auch nicht näher erläutert werden. Dabei entspricht der Grundaufbau des Kampfpanzerturms KPT' im wesentlichen der schematischen Darstellung nach Fig. 1.

Der Luftverteilungsbehälter ist als flacher, sich über einen Teil der Länge des Innenraums erstreckender Schlauch 15 ausgebildet, wie er in den Fig. 3 und 4 dargestellt ist. Der Schlauch 15 ist über eine Luftzuführungsleitung 14 an das im Elektronikraum angeordnete Kühlgebläse 13 angeschlossen und unter der Decke des Besatzungsraums 18 entlanggeführt und an dieser lösbar befestigt. Wie bereits erläutert, ist vorne in dem Kampfpanzerturm KPT' die Hauptwaffe HW, wobei beim Abschuß der Waffenverschluß WV in den Innenraum in den Bereich WV' zurückläuft und dabei sich je nach dem Grad der Elevation auch in Richtung der Decke 18 des Innenraums bewegen kann. Die besondere Ausbildung des Luftverteilungsbehälters als flacher, flexibler Schlauch, der an der Decke 18 lösbar befestigt ist, bringt den Vorteil mit sich, daß der Schlauch 15 entweder jeweils in einen Bereich verlegt werden kann, in dem er weder den Waffenrücklauf noch den Waffenbediener WB stört, oder er bleibt an Ort und Stelle, wird aber infolge seiner großen Flexibilität im aufgeblasenen Zustand selbst dann nicht zerstört, wenn er vom rücklaufenden Waffenverschluß WV berührt wird.

Fig. 5 zeigt eine Variante des Luftzuführungssystems im Kampfpanzerturm, wobei wiederum die üblichen, im Kampfpanzerturm angeordneten Geräte und Handhabungen nicht näher erläutert werden. Der an der Decke des Innenraums entlanggeführte, als flacher Schlauch 15' ausgebildete Luftverteilungsbehälter ist wiederum über eine bewegliche Luftzuführungsleitung 14' und eine feste Leitung 14.1' an das Kühlgebläse 13' angeschlossen. Die durch die Austrittsöffnungen des Luftverteilungsbehälters 15' ausströmende Luft kommt in erster Linie dem im Turm KPT 2' erhöht sitzenden Bediener WB 1 zugute. Das vordere Ende des Luftverteilungsbehälters 15' ist über eine Verbindungsleitung 16' an einen Luftverteilungsbehälter 17 angeschlossen, der unterhalb des Turms angeordnet ist und somit Luftzuführung für den tieferen Teil des Turms bzw. der Fahrzeugwanne übernimmt, in der beispielsweise ein weiterer Bediener WB 2 sitzt.

Selbstverständlich kann auch bei den Ausführungsformen nach Fig. 4 und 5 der Luftverteilungsbehälter als flaches Kissen oder auch als ein Bündel flacher Schläuche ausgebildet sein.

## Patentansprüche

1. Besatzungsraum eines Kampfpanzers oder Kampfpanzerturms, mit einem Luftzuführungssystem wobei in den Besatzungsraum (1, 18) von vorne die Hauptwaffe (HW) derart hineingeführt ist, dass sich der Waffenverschluss (WV) im Besatzungsraum befindet und hinter dem Besatzungsraum (1, 18) ein von diesem abgetrennter Elektronikraum (2) angeordnet ist, mit einem im Elektronikraum angeordneten Gebläse (3, 13), von dem aus über mindestens eine Luftzuführungsleitung (4, 14) die Luft einem im Besatzungsraum (1, 18) angeordneten Luftverteilungsbehälter (5, 15) zugeführt wird, der aus einem flexiblen, schwer entflammbaren Material besteht und eine an die Luftzuführungsleitung (4, 14) angeschlossene Lufteintrittsöffnung aufweist, sowie eine Vielzahl von in den Besatzungsraum (1, 18) gerichteten Luftaustrittsschlitzen (5.1, 15.1), die an vorgegebenen Stellen des Luftverteilungsbehälters und in vorgegebener Dichte und Größe in den Behälterwänden angeordnet sind, wobei der Luftverteilungsbehälter (5, 15) mindestens teilweise oberhalb des Verschlusses (WV) der Hauptwaffe (HW) angeordnet und mindestens dort sowie im Rücklaufbereich des Verschlusses (WV) flach als Kissen (5), Schlauch (15, 15') oder Bündel von Schläuchen ausgebildet ist.

2. Besatzungsraum nach Anspruch 1, **dadurch gekennzeichnet, dass** an dem im Besatzungsraum eines Kampfpanzerturms angeordneten Luftverteilungsbehälter (5, 15') eine Abzweigleitung (16, 16') angeschlossen ist, die in die Wanne des Kampfpanzers geführt ist und an die mindestens ein weiterer Luftverteilungsbehälter (17) angeschlossen ist.

3. Besatzungsraum nach einem der Ansprüche 1 oder 2, **dadurch gekennzeichnet, dass** der Luftverteilungsbehälter einen sich mindestens über einen Teil seiner Gesamtlänge erstreckenden Schlitz in der Behälterwand aufweist, der luftdicht verschließbar ist.

4. Besatzungsraum nach Anspruch 3, **dadurch gekennzeichnet, dass** der Schlitz mittels eines Klettverschlusses verschließbar ist.

5. Besatzungsraum nach Anspruch 3, **dadurch gekennzeichnet, dass** der Schlitz mittels eines Reißverschlusses verschließbar ist.

6. Besatzungsraum nach einem der Ansprüche 1 bis 5, **dadurch gekennzeichnet, dass** der Luftverteilungsbehälter über Druckknöpfe an den Wänden des Besatzungsraums befestigbar ist.

7. Besatzungsraum nach einem der Ansprüche 1 bis 5, **dadurch gekennzeichnet, dass** der Luftverteilungsbehälter (15) über Klettbandbefestigungen (10, 12) an den Wänden des Besatzungsraumes befestigbar ist.

8. Besatzungsraum nach einem der Ansprüche 1 bis 7, **dadurch gekennzeichnet, dass** mindestens ein Teil der Luftaustrittsöffnungen mit abnehmbaren Verschlußvorrichtungen verschließbar ist.

9. Besatzungsraum nach Anspruch 8, **dadurch gekennzeichnet, dass** die Verschlußvorrichtungen als Klettverschlußbänder ausgebildet sind.

## Claims

1. Crew compartment of a tank or tank turret having an air supply system, wherein the main weapon (HW) is introduced into the crew compartment (1, 18) from the front in such a way that the breech block (WV) is situated in the crew compartment and an electronic equipment compartment (2) is disposed behind and separated from the crew compartment (1, 18), comprising a fan (3, 13), which is disposed in the electronic equipment compartment and from which the air is supplied through at least one air supply line (4, 14) to an air distribution container (5, 15), which is disposed in the crew compartment (1, 18), is made of a flexible, extremely flame-proof material and has an air inlet opening connected to the air supply line (4, 14), as well as a plurality of air outlet slots (5.1, 15.1), which are directed into the crew compartment (1, 18) and are disposed at preselected points of the air distribution container and in a preselected density and size in the container walls, wherein the air distribution container (5, 15) is disposed at least partially above the breech block (WV) of the main weapon (HW) and at least there as well as in the recoil region of the breech block (WV) is designed flat as a cushion (5), tube (15, 15') or bundle of tubes.

2. Crew compartment according to claim 1, **characterized in that** connected to the air distribution container (5, 15') disposed in the crew compartment of a tank turret is a branch line (6, 16'), which runs into the tray of the tank and to which at least one further air distribution container (17) is connected.

3. Crew compartment according to one of claims 1 or 2, **characterized in that** the air distribution container has in the container wall a slot, which extends at least over part of the entire length thereof and is closable in an airtight manner.

4. Crew compartment according to claim 3, **characterized in that** the slot is closable by means of a Velcro fastener.

5. Crew compartment according to claim 3, **characterized in that** the slot is closable by means of a zip fastener.

6. Crew compartment according to one of claims 1 to 5, **characterized in that** the air distribution container is fastenable by means of press studs to the walls of the crew compartment.

7. Crew compartment according to one of claims 1 to 5, **characterized in that** the air distribution container (15) is fastenable by means of Velcro strip fasteners (10, 12) to the walls of the crew compartment.

8. Crew compartment according to one of claims 1 to 7, **characterized in that** at least some of the air outlet openings are closable by means of removable closure apparatuses.

9. Crew compartment according to claim 8, **characterized in that** the closure apparatuses take the form of Velcro fastening strips.

## Revendications

1. Habitacle d'un char de combat ou d'une tourelle de char de combat, avec un système d'amenée d'air, l'arme principale (HW) étant introduite dans l'habitacle (1, 18) par l'avant de sorte que la culasse de l'arme (WV) se trouve dans l'habitacle, et un compartiment électronique (2) étant disposé derrière l'habitacle (1, 18) et séparé de ce dernier, avec un ventilateur (3, 13) disposé dans le compartiment électronique, ventilateur à partir duquel l'air, par l'intermédiaire d'au moins une conduite d'amenée d'air (4, 14), est conduit à un réservoir de répartition d'air (5, 15) disposé dans l'habitacle (1, 18), lequel réservoir est constitué d'un matériau flexible difficilement inflammable et présente un orifice d'admission d'air raccordée à la conduite d'amenée d'air (4, 14), ainsi qu'une multiplicité de fentes d'évacuation d'air (5.1, 15.1), orientées vers l'intérieur de l'habitacle (1, 18), qui sont disposées à des emplacements prédéfinis du réservoir de répartition d'air et selon une densité et des dimensions prédéfinies dans les parois de réservoir, le réservoir de répartition d'air (5, 15) étant disposé au moins partiellement au-dessus de la culasse (WV) de l'arme principale (HW) et étant constitué, au moins là ainsi que dans la zone de recul de la culasse (WV), de façon plate sous forme de coussin (5), de tuyau (15, 15') ou de faisceau de flexibles.

2. Habitacle selon la revendication 1, **caractérisé en ce que**, sur le réservoir de répartition d'air (5, 15') disposé dans l'habitacle d'une tourelle de char de combat, une conduite d'embranchement (6, 16') est raccordée, qui ici débouche dans le compartiment inférieur du char de combat et à laquelle est raccordé au moins un autre réservoir de répartition d'air (17).

3. Habitacle selon une des revendications 1 ou 2, **caractérisé en ce que** le réservoir de répartition d'air présente, dans la paroi de réservoir, une fente s'étendant au moins sur une partie de la longueur totale du réservoir et qui peut être obturée de façon étanche à l'air.

4. Habitacle selon la revendication 3, **caractérisé en ce que** la fente peut être obturée au moyen d'une fermeture Velcro.

5. Habitacle selon la revendication 3, **caractérisé en ce que** la fente peut être obturée au moyen d'une fermeture à glissière.

6. Habitacle selon une des revendications 1 à 5, **caractérisé en ce que** le réservoir de répartition d'air peu être fixé aux parois de l'habitacle par l'intermédiaire des boutons-pression.

7. Habitacle selon une des revendications 1 à 5, **caractérisé en ce que** le réservoir de répartition d'air (15) peut être fixé aux parois de l'habitacle par l'intermédiaire des fixations par bande Velcro (10, 12).

8. Habitacle selon une des revendications 1 à 7, **caractérisé en ce que** au moins une partie des orifices d'évacuation d'air peut être obturée avec des dispositifs d'obturation amovibles.

9. Habitacle selon la revendication 8, **caractérisé en ce que** les dispositifs d'obturation sont constitués en tant que bandes de fermeture Velcro.
